# EUROPEAN PATENT APPLICATION

(11) **EP 4 513 590 A1**
(43) Date of publication of application: **26.02.2025**
(21) Application number: 23889208.7
(22) Date of filing: 10.11.2023
(51) Int. Cl.: H01M 4/36, H01M 4/48, H01M 4/58, H01M 4/62, H01M 10/052, H01M 4/02

(54) **NEGATIVE ELECTRODE ACTIVE MATERIAL, NEGATIVE ELECTRODE COMPRISING SAME, SECONDARY BATTERY COMPRISING SAME, AND METHOD FOR PRODUCING NEGATIVE ELECTRODE ACTIVE MATERIAL**

(30) Priority: 11.11.2022 KR 20220150562; 09.11.2023 KR 20230154765
(71) Applicant: LG Energy Solution, Ltd., Seoul 07335 (KR)
(72) Inventor: CHOI, Junghyun, Daejeon 34122 (KR); PARK, Heeyeon, Daejeon 34122 (KR); SHIN, Sun Young, Daejeon 34122 (KR); LEE, Su Min, Daejeon 34122 (KR); LEE, Yong Ju, Daejeon 34122 (KR)
(74) Representative: Hoffmann Eitle
(86) International application number: PCT/KR2023/018072
(87) International publication number: WO 2024/101952

(57) **Abstract**

The present invention relates to a negative electrode active material, a negative electrode comprising same, a secondary battery comprising same, and a method for producing the negative electrode active material.

## Description

### [Technical Field]

This application claims priority to and the benefit of Korean Patent Application No. 10-2022-0150562 filed in the Korean Intellectual Property Office on November 11, 2022, and Korean Patent Application No. 10-2023-0154765 filed in the Korean Intellectual Property Office on November 09, 2023, the entire contents of which are incorporated herein by reference.

The present invention relates to a negative electrode active material, a negative electrode including the same, a secondary battery including the negative electrode, and a method for manufacturing a negative electrode active material.

### [Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as LiCoO₂ and LiMn₂O₄ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.

On the other hand, among the silicon-based active materials, a silicon-based oxide, specifically, a silicon-based oxide represented by SiOₓ (0<x<2) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.

In this regard, studies have been conducted to reduce the irreversible capacity and to improve the initial efficiency by doping or intercalating metals such as Li, Al, and Mg into silicon-based oxides. However, a negative electrode slurry including a metal-doped silicon-based oxide as a negative electrode active material has a problem in that the metal oxide formed by doping metal reacts with moisture to increase pH of the negative electrode slurry and to change the viscosity. Accordingly, the state of the manufactured negative electrode is poor and the charging and discharging efficiency of the negative electrode is lowered.

In addition, as the cycle progresses, swelling of the negative electrode occurs, causing many side reactions with an electrolyte solution.

Accordingly, there is a need to develop a negative electrode active material capable of suppressing a surface reaction of a negative electrode active material including a silicon-based oxide, improving phase stability of slurry, and improving charging and discharging efficiency of a negative electrode manufactured from the negative electrode active material.

### Citation List

### Patent Literature

(Patent Literature 1) Korean Patent Application Publication No. 10-2019-0090730

### [Detailed Description of the Invention]

### [Technical Problem]

The present invention relates to a negative electrode active material, a negative electrode including the same, a secondary battery including the negative electrode, and a method for manufacturing a negative electrode active material.

### [Technical Solution]

An exemplary embodiment of the present invention provides a negative electrode active material including: a silicon-based particle including SiOₓ (0<x<2) and a Mg compound; and a carbon layer provided on at least a portion of the silicon-based particle, wherein the negative electrode active material includes N and H elements, wherein a total content of the N and H elements is 250 ppm or more and less than 3,000 ppm on the basis of 100 parts by weight of the negative electrode active material, and wherein a weight ratio of the H element to the N element is 1 or less.

Another exemplary embodiment of the present invention provides a negative electrode.

Still another exemplary embodiment of the present invention provides a secondary battery including the negative electrode.

Yet still another exemplary embodiment of the present invention provides a method for manufacturing the negative electrode active material according to the present invention, the method including: vaporizing Si powder, SiO₂ powder, and Mg, respectively, and mixing the same, and then cooling the mixed gas to form a silicon-based particle; and mixing the silicon-based particle and a carbon-based material to provide a carbon layer on at least a portion of the surface of the silicon-based particle.

### [Advantageous Effects]

The negative electrode active material according to an exemplary embodiment of the present invention includes a Mg compound, and the sum of N and H in the negative electrode active material is 250 ppm or more and less than 3000 ppm, and the weight ratio of H to N is 1 or less. The negative electrode active material satisfying the above features has increased hardness and elasticity, which is advantageous for swelling of the negative electrode, and the carbon layer with increased conductivity, which has an effect of improving life characteristics.

Accordingly, the negative electrode including the negative electrode active material according to an exemplary embodiment of the present invention, and the secondary battery including the negative electrode have effects of improving the discharge capacity, initial efficiency, resistance performance and/or life characteristics of the battery.

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

The terms used in the present specification are merely used to describe illustrative exemplary embodiments of the present invention but are not intended to limit the present invention. As used herein, the singular forms "a", "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter (D₅₀) may be defined as a particle diameter corresponding to 50% of the cumulative volume in the particle size distribution curve of the particles (graph curve of the particle size distribution). The average particle diameter (D₅₀) may be measured using, for example, a laser diffraction method. In the laser diffraction method, in general, particle diameters ranging from a submicron region to several millimeters can be measured, and results with high reproducibility and high resolvability can be obtained.

Hereinafter, preferred embodiments of the present invention will be described in detail. However, it should be understood that the embodiments of the present invention may be modified in various forms and the scope of the present invention is not limited to the embodiments described below.

### <Negative Electrode Active Material>

An exemplary embodiment of the present invention provides a negative electrode active material including: a silicon-based particle including SiOₓ (0<x<2) and a Mg compound; and a carbon layer provided on at least a portion of the silicon-based particle, wherein the negative electrode active material includes N and H elements, wherein a total content of the N and H elements is 250 ppm or more and less than 3,000 ppm on the basis of 100 parts by weight of the negative electrode active material, and wherein a weight ratio of the H element to the N element is 1 or less.

The negative electrode active material according to an exemplary embodiment of the present invention includes a silicon-based particle. The silicon-based particle includes SiOₓ(0<x<2) and a Mg compound.

The SiOₓ (0<x<2) may correspond to a matrix in the silicon-based particle. The SiOₓ(0<x<2) may be a form of including Si and/or SiO₂, and the Si may form a phase. For example, the SiOₓ(0<x<2) may be a composite including amorphous SiO₂ and a Si crystal. That is, x corresponds to a ratio of the number of O to Si included in the SiOₓ(0<x<2). When the silicon-based particle includes the SiOₓ(0<x<2), a discharge capacity of a secondary battery can be improved.

The Mg compound may correspond to a matrix in the silicon-based particle. The Mg compound may be present in the form of at least one of a magnesium atom, magnesium silicate, magnesium silicide, and a magnesium oxide in the silicon-based particle. When the silicon-based particle includes a Mg compound, the initial efficiency is improved.

The Mg compound may be distributed on the surface of and/or inside the silicon-based particle in the form of being doped to the silicon-based particle. The Mg compound may be distributed on the surface of and/or inside the silicon-based particle to serve to control volume expansion/contraction of the silicon-based particle to an appropriate level and to prevent damage to the active material. In addition, the Mg compound may be contained, in terms of lowering a ratio of an irreversible phase (for example, SiO₂) of the silicon-based oxide particle to increase the efficiency of the active material.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

The Mg compound may be present in the form of magnesium silicate. The Mg silicate may be divided into crystalline magnesium silicate and amorphous magnesium silicate.

The Mg compound may be present in the form of at least one type of magnesium silicate of Mg₂SiO₄ and MgSiO₃ in the silicon-based particle.

The Mg element may be included in an amount of 0.1 part by weight to 40 parts by weight, specifically, 0.1 part by weight to 20 parts by weight, or 0.1 part by weight to 10 parts by weight, and more specifically, 0.5 part by weight to 8 parts by weight on the basis of a total of 100 parts by weight of the negative electrode active material. If the content of Mg exceeds the range, the initial efficiency increases as the content of Mg increases, but the discharge capacity decreases. Therefore, appropriate discharge capacity and initial efficiency can be implemented when the above range is satisfied.

The content of the Mg element can be confirmed through ICP analysis. Specifically, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the prepared negative electrode active material can be analyzed.

In an exemplary embodiment of the present invention, the silicon-based particle may include a further metal atom. The metal atom may be present in the form of at least one of a metal atom, a metal silicate, a metal silicide and a metal oxide in the silicon-based particle. The metal atom may include at least one selected from the group consisting of Mg, Li, Al and Ca. Accordingly, initial efficiency of the negative electrode active material may be improved.

In an exemplary embodiment of the present invention, the silicon-based particle is provided with a carbon layer on at least a portion of a surface thereof. In this case, the carbon layer may be partially coated on at least a portion of the surface, i.e., the surface of the particle, or may be coated on the entire surface of the particle. Conductivity is imparted to the negative electrode active material by the carbon layer, so that the initial efficiency, life characteristics, and battery capacity characteristics of a secondary battery can be improved.

In an exemplary embodiment of the present invention, the carbon layer includes amorphous carbon. Further, the carbon layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or may be carbon-based material formed by using a hydrocarbon as a source of chemical vapor deposition.

The carbide of the other organic materials may be a carbide of organic material selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 part by weight to 50 parts by weight, 0.1 part by weight to 30 parts by weight, or 0.1 part by weight to 20 parts by weight on the basis of a total of 100 parts by weight of the negative electrode active material. More specifically, the carbon layer may be included in an amount of 0.5 part by weight to 15 parts by weight, 1 part by weight to 10 parts by weight, or 1 part by weight to 5 parts by weight. When the above range is satisfied, reduction in capacity and efficiency of the negative electrode active material can be prevented.

In an exemplary embodiment of the present invention, a thickness of the carbon layer may be 1 nm to 500 nm, and specifically 5 nm to 300 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the carbon layer may be formed by chemical vapor deposition (CVD) using at least one hydrocarbon gas selected from the group consisting of methane, ethane and acetylene.

In the present invention, the crystallinity of the carbon layer can be confirmed by calculating the D/G band ratio according to Raman spectroscopy. Specifically, measurements can be made using a Renishaw 2000 Raman microscope system and 532 nm laser excitation, and using a 100x optical lens with a low laser power density and an exposure time of 30 seconds in order to avoid a laser heat effect. In order to reduce a deviation depending on position, a total of 25 points can be determined for a region of 5µm × 5µm, and fitted using the Lorentzian function. Thereafter, average values of the D band and G band can be calculated.

In an exemplary embodiment of the present invention, the negative electrode active material may further include N and H elements.

In an exemplary embodiment of the present invention, the total content of the N and H elements may be 250 ppm or more and less than 3000 ppm. Specifically, the total content may be 280 ppm or more and 2000 ppm or less, 280 ppm or more and 1800 ppm or less, or 300 ppm or more and 1800 ppm or less. The lower limit of the content of the N and H elements may be 250 ppm, 280 ppm, 290 ppm, 300 ppm, 350 ppm, 400 ppm, 450 ppm, 500 ppm, 550 ppm, 600 ppm, or 700 ppm, and the upper limit of the content of the N and H elements may be 2900 ppm, 2500 ppm, 2000 ppm, 1800 ppm, 1600 ppm, 1500 ppm, 1300 ppm, or 1000 ppm.

When the content of the N and H elements satisfies the above range, a Mg-Si-O-N film is effectively formed on the surface of the silicon-based particle, making it possible to control swelling of the material and to increase the conductivity of the carbon layer, which has an effect of improving life characteristics. On the other hand, if the content of N and H is below the above range, the Mg-Si-O-N film is not formed well on the surface of the silicon-based particle, making it difficult to control the swelling, and if the content of N and H exceeds the above range, there is a problem in that controlling the swelling is difficult because the hardness and elasticity of the Mg-Si-O-N film are deteriorated. Specifically, in the case of a Mg-Si-O-N structure rather than a structure such as Si-ON glass, Mg can bond with O to provide a relatively firm structure. In the present invention, the content of N and H satisfies the above-described specific range and specific ratio, which is advantageous to form a Mg-Si-O-N structure, making it possible to improve hardness and elasticity and thus to control swelling. If the content of N and H is too high or does not satisfy the above-described ratio, the probability of forming Si-O-H or other structures is relatively higher than the probability of forming Mg-Si-O-N.

The content and ratio of the above-described N and H elements may be determined by process conditions or materials used in the process of manufacturing the negative electrode active material. For example, the above-described range may be satisfied by mixing an appropriate amount of a material including appropriate amounts of N and H, such as ammonia, with a material that provides a carbon source when forming the carbon layer.

In an exemplary embodiment of the present invention, the negative electrode active material may include an Mg-Si-O-N film provided on the surface of the silicon-based particle. The Mg-Si-O-N film may be in the form of including silicon oxynitride having a Si-N bond.

The N may be present in the form of silicon oxynitride on the surface of the silicon-based particle including the Mg compound or may be present in the form of being included in the carbon layer. Specifically, N may have a Si-N bond and be present in the form of silicon oxynitride on the surface of the silicon-based particle, or N may be included in the carbon layer in the form of having a C-N bond.

That is, at least some of the N in the negative electrode active material according to the present invention may be present with a Si-N bond. In another exemplary embodiment, at least some of the N in the negative electrode active material according to the present invention may be included in the carbon layer.

The H may be present in the form of having a Si-O-H bond on the surface of the silicon-based particle including the Mg compound or may be present in the form of being included in the carbon layer. Specifically, H may be included in the carbon layer in the form of having a C-H bond.

In an exemplary embodiment of the present invention, the content of the N may be 125 ppm or more and less than 3000 ppm. Specifically, the content may be 150 ppm or more and 2500 ppm or less, 175 ppm or more and 2000 ppm or less, 200 ppm or more and 1500 ppm or less, or 210 ppm or more and 1200 ppm or less. The lower limit of the content of N may be 125 ppm, 150 ppm, 175 ppm, 200 ppm, 210 ppm, 220 ppm, 250 ppm, 350 ppm, 400 ppm, or 430 ppm, and the upper limit of the content of N may be 2900 ppm, 2500 ppm, 2000 ppm, 1500 ppm, 1200 ppm, 1000 ppm, 800 ppm, 600 ppm, or 500 ppm.

When the content of N satisfies the above range, a Mg-Si-O-N film is effectively formed on the surface of the silicon-based particle, which has effects of controlling swelling of the material to improve life characteristics and increasing the conductivity of the carbon layer to improve life characteristics. On the other hand, if the content of N is below the above range, the Mg-Si-O-N film is not formed on the surface of the silicon-based particle, making it difficult to control the swelling, and if the content of N exceeds the above range, there is a problem in that controlling the swelling is difficult because the hardness and elasticity of the Mg-Si-O-N film are deteriorated.

In an exemplary embodiment of the present invention, the content of H may be 1 ppm or more and less than 1500 ppm. Specifically, the content may be 10 ppm or more and 1200 ppm or less, 50 ppm or more and 1000 ppm or less, 70 ppm or more and 800 ppm or less, or 70 ppm or more and 600 ppm or less. The lower limit of the content of H may be 1 ppm, 10 ppm, 50 ppm, 70 ppm, 80 ppm, 100 ppm, 200 ppm, or 300 ppm, and the upper limit of the content of H may be 1400 ppm, 1200 ppm, 1000 ppm, 800 ppm, 600 ppm, 500 ppm, or 400 ppm.

When the content of H satisfies the above range, the functional groups in the carbon layer are less, so side reactions with the electrolyte solution are reduced and the life is accordingly improved. On the other hand, if the content of H is below the above range, the hydrophobicity of the active material becomes too large and there is a problem of poor dispersion in the aqueous slurry, and if the content of H exceeds the above range, there is a problem in that the functional groups are excessively present in the carbon layer, leading to an increase in side reactions with the electrolyte solution, thereby deteriorating battery performance.

In an exemplary embodiment of the present invention, a weight ratio of the H to N may be 1 or less. Specifically, the weight ratio may be greater than 0 and 1 or less, or 0.1 or greater and 1 or less.

The weight ratio of H to N may be 0.95 or less, 0.9 or less, 0.85 or less, or 0.8 or less, and may be 0 or greater, greater than 0, 0.01 or greater, 0.1 or greater, greater than 0.1, 0.2 or greater, or 0.3 or greater. When the weight ratio of H to N satisfies the above range, the negative electrode active material is well dispersed in the aqueous slurry, and the conductivity of the negative electrode active material and withdrawing of Li ions are excellent. On the other hand, if the weight ratio of H to N is below the above range, many defects occur in the carbon layer to increase side reactions with the electrolyte solution, resulting in poor cycle performance, and if the weight ratio exceeds the above range, the hydrophobicity of the carbon layer increases, resulting in poor dispersion in the aqueous slurry.

In the present specification, the contents (concentrations) of the N and H elements may be measured by putting 0.1 g of the negative electrode active material sample into a crucible and placing the crucible into an ONH analyzer (Bruker, G8 Galileo).

An average particle diameter (D₅₀) of the negative electrode active material may be 0.1 µm to 30 µm, specifically 1 µm to 20 µm, and more specifically 1 µm to 10 µm. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

The BET specific surface area of the negative electrode active material may be 1 m²/g to 100 m²/g, specifically, 1 m²/g to 70 m²/g, and more specifically, 1 m²/g to 50 m²/g, for example, 2 m²/g to 30 m²/g. When the above range is satisfied, side reactions between the electrolyte solution and the negative electrode active material can be reduced during charging and discharging of the battery, and thus the life characteristics of the battery can be improved.

### <Method for Manufacturing Negative Electrode Active Material>

An exemplary embodiment of the present invention provides a method for manufacturing a negative electrode active material, the method including: vaporizing Si powder, SiO₂ powder, and Mg, respectively, and mixing the same, and then cooling the mixed gas to form a silicon-based particle; and mixing the silicon-based particle and a carbon-based material to provide a carbon layer on at least a portion of a surface of the silicon-based particle.

The Si powder and SiO₂ powder may be manufactured by heating the powders in a vacuum to vaporize the same and then depositing the vaporized mixed gas. In this case, the Si powder and the SiO₂ powder may be vaporized by heating individually the same, or may be vaporized by heating the powders in a mixed state.

The Si powder and the SiO₂ powder may be included at a weight ratio of 2:8 to 8:2, and specifically, may be included at a weight ratio of 4:6 to 6:4 or 5:5. Specifically, the Si powder and the SiO₂ powders may be heat-treated at 1300°C to 1800°C, 1400°C to 1800°C, or 1400°C to 1600°C under vacuum.

The mixed gas vaporized through the heat treatment can be cooled under vacuum and deposited into a solid phase. Additionally, the preliminary silicon-based particle can be manufactured by heat-treating the deposited solid phase in an inert atmosphere. The heat treatment may be performed at 500°C to 1000°C, or 700°C to 900°C.

A carbon layer may be provided on the surface of the silicon-based particle.

The carbon layer may be formed, for example, by using chemical vapor deposition (CVD) in which a carbon-based material, for example, hydrocarbon gas is used or by carbonizing a material serving as a carbon source.

Specifically, the carbon layer may be formed by putting the formed silicon-based particle into a reactor, and then depositing hydrocarbon gas at 600 to 1200°C by chemical vapor deposition (CVD). The hydrocarbon gas may be at least one hydrocarbon gas selected from the group consisting of methane, ethane, propane and acetylene, and may be heat-treated at 900°C to 1000°C.

In this case, N and H within the above-described ranges can be included in the negative electrode active material by the following method.

### (1) A method of performing a step of heat-treating the silicon-based particles in a nitrogen atmosphere after forming the silicon-based particles.

In an exemplary embodiment of the present invention, Si powder, SiO₂ powder, and Mg may be vaporized, respectively, and then mixed, the mixed gas may be cooled to form silicon-based particles, and subsequently, the silicon-based particles may be heat-treated in a nitrogen (N₂) atmosphere. Specifically, the silicon-based particles including a Mg compound may be heat-treated in a nitrogen atmosphere to introduce silicon oxynitride to the surface of the silicon-based particles.

In this case, the heat treatment temperature may be 850°C to 1200°C, and specifically 900°C to 1100°C.

Thereafter, a carbon layer may be formed on the surface of the silicon-based particles by using the chemical vapor deposition (CVD) method described above under an Ar atmosphere.

### (2) A method of performing the step of mixing the silicon-based particles and a carbon-based material to provide a carbon layer on at least a portion of the surface of the silicon-based particles, under N₂ atmosphere

In an exemplary embodiment of the present invention, the step of mixing the silicon-based particles and the carbon-based material to provide a carbon layer on at least a portion of the surface of the silicon-based particles may be performed under N₂ atmosphere.

In this case, the carbon layer may be formed on the surface of the silicon-based particles by using the chemical vapor deposition (CVD) method in the above step. In this case, the carbon-based material may be hydrocarbon gas.

In another exemplary embodiment, in the above step, the carbon layer may be formed by coating a carbon source on the surface of the silicon-based particles. In this case, the carbon-based material may be pitch.

In an exemplary embodiment of the present invention, before the step of mixing the silicon-based particles and the carbon-based material to provide a carbon layer on at least a portion of the surface of the silicon-based particles, a step of heat-treating the silicon-based particles under N₂ atmosphere may be further performed.

In this case, the heat treatment temperature may be 850°C to 1200°C, and specifically 900°C to 1100°C.

### (3) A method of further causing NH₃ gas to be further included in addition to the carbon-based material in the step of mixing the silicon-based particles and a carbon-based material to provide a carbon layer on at least a portion of the surface of the silicon-based particles

In an exemplary embodiment of the present invention, in the step of providing a carbon layer on at least a portion of the surface of the silicon-based particles, NH₃ may be further added in addition to the carbon-based material.

In this case, a weight ratio of the carbon-based material and NH₃ may be 0.8:1 to 30:1. Specifically, the weight ratio may be 0.8:1 to 20:1, 0.8:1 to 10:1, 0.8:1 to 5:1, 0.8:1 to 2:1, 0.8:1 to 1.5:1, or 0.8:1 to 1.2:1. When the above range is satisfied, N and H are introduced into the negative electrode active material within appropriate ranges, whereby appropriate hardness and elasticity can be provided to the negative electrode active material and the conductivity can be improved.

The step may be performed using the chemical vapor deposition (CVD) method.

The negative electrode active material according to the present invention may be manufactured by appropriately using the above methods (1) to (3), but the present invention is not limited thereto. For example, the negative electrode active material according to the present invention may be manufactured by appropriately employing a combination of the above methods (1) to (3).

When the negative electrode active material is formed using the above method, N and H are introduced into the negative electrode active material within appropriate ranges, whereby the performance of a battery using the same can be improved.

### <Negative Electrode>

The negative electrode according to an exemplary embodiment of the present invention may include the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder a thickener and/or a conductive material.

The negative electrode active material layer may be formed by applying a negative electrode slurry including a negative electrode active material, a binder, a thickener, and/or a conductive material to at least one surface of a current collector, and drying and roll-pressing the same.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic substance capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as SiO_{β}(0<β<2), SnO₂, vanadium oxide, lithium titanium oxide, and lithium vanadium oxide; or a composite including the metallic substance and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, and specifically 10:90 to 50:50.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

The negative electrode slurry including the negative electrode active material according to an exemplary embodiment of the present invention may have pH of 7 to 11 at 25°C. When pH of the negative electrode slurry satisfies the above range, the rheological properties of the slurry are stabilized. On the other hand, when pH of the negative electrode slurry is less than 7 or pH of the negative electrode slurry exceeds 11, carboxymethylcellulose (CMC) used as a thickener is decomposed, resulting in lowering in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 µm to 20 µm. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, a weight ratio of the negative electrode active material and the additional negative electrode active material included in the negative electrode slurry may be 1:99 to 30:70, and specifically 5:95 to 30:70 or 10:90 to 20:80.

In an exemplary embodiment of the present invention, the entire negative electrode active materials included in the negative electrode slurry may be included in an amount of 60 parts by weight to 99 parts by weight, and specifically 70 parts by weight to 98 parts by weight on the basis of a total of 100 parts by weight of solid content of the negative electrode slurry.

In an exemplary embodiment of the present invention, the binder may be included in an amount of 0.5 part by weight to 30 parts by weight, and specifically 1 part by weight to 20 parts by weight, on the basis of a total of 100 parts by weight of the solid content of the negative electrode slurry.

In an exemplary embodiment of the present invention, the conductive material may be included in an amount of 0.5 part by weight to 25 parts by weight, specifically 1 part by weight to 20 parts by weight on the basis of a total of 100 parts by weight of the solid content of the negative electrode slurry.

In an exemplary embodiment of the present invention, the thickener may be included in an amount of 0.5 part by weight to 25 parts by weight, specifically 0.5 part by weight to 20 parts by weight, and more specifically 1 part by weight to 20 parts by weight on the basis of a total of 100 parts by weight of the solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a solid content of the negative electrode slurry may be 20 parts by weight to 75 parts by weight, and specifically 30 parts by weight to 70 parts by weight on the basis of a total of 100 parts by weight of the negative electrode slurry.

### <Secondary Battery>

A secondary battery according to an exemplary embodiment of the present invention may include the negative electrode according to an exemplary embodiment of the present invention described above. Specifically, the secondary battery may include a negative electrode, a positive electrode, a separator interposed between the positive electrode and the negative electrode, and an electrolyte solution, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄(0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.5); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution with high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

Another exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### Mode for Invention

Hereinafter, preferred examples will be provided for better understanding of the present invention. However, it will be apparent to one skilled in the art that the examples are only provided to illustrate the present invention and various modifications and alterations are possible within the scope and technical spirit of the present invention. Such modifications and alterations naturally fall within the scope of claims included herein.

### <Examples and Comparative Examples>

### Example 1

92 g of Si powder and SiO₂ powder mixed in a molar ratio of 1:1 was mixed with 8 g of Mg and vacuum-heated to a sublimation temperature of 1,400°C in a reactor. Then, a mixed gas of sublimated Mg, Si, and SiO₂ was reacted in a cooling zone in a vacuum state where a cooling temperature was 800°C, and condensed into a solid phase to form silicon-based particles. Thereafter, heat treatment was performed in an inert atmosphere and at a temperature of 800°C. Then, the silicon-based particles were pulverized into a size of 6 µm (D₅₀) for 3 hours by using 15 sus ball media added for ball mill. Thereafter, the silicon-based particles were positioned in a hot zone of a CVD apparatus while maintaining the inert atmosphere by causing Ar gas to flow, and a reaction was carried out at 10⁻¹ torr for 20 minutes while putting and blowing methane and ammonia at a weight ratio of 9:1 into the hot zone of 950°C using Ar as a carrier gas, whereby a carbon layer was formed on the surface of the silicon-based particles.

The material prepared as described above was used as a negative electrode active material of Example 1. The D₅₀ of the negative electrode active material was 6 µm, and the specific surface area was 6 m²/g.

As a result of measurement using an ONH component analyzer, the content of nitrogen included in the negative electrode active material was 450 ppm and the content of hydrogen was 360 ppm.

### Example 2

A negative electrode active material was prepared in the same manner as in Example 1, except that the weight ratio of methane and ammonia was 1:1.

As a result of measurement using an ONH component analyzer, the content of nitrogen included in the negative electrode active material was 1100 ppm and the content of hydrogen was 500 ppm.

### Example 3

A negative electrode active material was prepared in the same manner as in Example 1, except that the weight ratio of methane and ammonia was 95:5.

As a result of measurement using an ONH component analyzer, the content of nitrogen included in the negative electrode active material was 220 ppm and the content of hydrogen was 80 ppm.

### Comparative Example 1

A negative electrode active material was prepared in the same manner as in Example 1, except that the weight ratio of methane and ammonia was 1:2.

As a result of measurement using an ONH component analyzer, the content of nitrogen included in the negative electrode active material was 1600 ppm and the content of hydrogen was 1500 ppm.

### Comparative Example 2

An active material was prepared in the same manner as in Example 1, except that the CVD temperature was 900°C.

As a result of measurement using an ONH component analyzer, the content of nitrogen included in the negative electrode active material was 400 ppm and the content of hydrogen was 430 ppm.

### Comparative Example 3

An active material was prepared in the same manner as in Example 1, except that the weight ratio of methane and ammonia was 1:3.

As a result of measurement using an ONH component analyzer, the content of nitrogen included in the negative electrode active material was 1500 ppm and the content of hydrogen was 1600 ppm.

### Comparative Example 4

An active material was prepared in the same manner as in Example 1, except that ammonia was not added.

As a result of measurement using an ONH component analyzer, the content of nitrogen included in the negative electrode active material was 10 ppm and the content of hydrogen was 1 ppm.

The configurations of the negative electrode active materials prepared in the Examples and the Comparative Examples are shown in Table 1 below.

**[Table 1]**

| | Based on total of 100 parts by weight of negative electrode active material | | | | | | D₅₀ (µm) | Specific surface area (m²/g) |
|---|---|---|---|---|---|---|---|---|
| | Content of N (ppm) | Content of H (ppm) | N+H (ppm) | H/N | Content of Mg (parts by weight) | Content of carbon layer (parts by weight) | | |
| Example 1 | 450 | 360 | 810 | 0.8 | 8 | 5 | 6 | 6 |
| Example 2 | 1100 | 500 | 1600 | 0.45 | 8 | 5 | 6 | 6 |
| Example 3 | 220 | 80 | 300 | 0.36 | 8 | 5 | 6 | 6 |
| Comparative Example 1 | 1600 | 1500 | 3100 | 0.94 | 8 | 5 | 6 | 6 |
| Comparative Example 2 | 400 | 430 | 830 | 1. 08 | 8 | 5 | 6 | 6 |
| Comparative Example 3 | 1500 | 1600 | 3100 | 1.07 | 8 | 5 | 6 | 6 |
| Comparative Example 4 | 10 | 1 | 11 | 0.1 | 8 | 5 | 6 | 6 |

In the present specification, the contents (concentrations) of the N and H elements were measured by putting 0.1 g of the negative electrode active material sample into a crucible and placing the crucible into an ONH analyzer (Bruker, G8 Galileo). The content of Mg element was confirmed by ICP analysis using an inductively coupled plasma atomic emission spectrometer (ICP-OES, AVIO 500 of Perkin-Elmer 7300).

The content of the carbon layer was confirmed under oxygen conditions by an elemental analysis method through combustion (G4 ICARUS of Bruker).

The D₅₀ of the negative electrode active material was analyzed by a PSD measurement method using a Microtrac apparatus.

The specific surface area of the negative electrode active material was measured by degassing gas at 200°C for 8 hours using a BET measuring apparatus (BEL-SORP-MAX, Nippon Bell), and performing N₂ adsorption/desorption at 77 K.

### <Experimental Example: Evaluation of discharge capacity, initial efficiency, and life (capacity retention rate) characteristics>

A negative electrode and a battery were manufactured using the negative electrode active materials of Examples and Comparative Examples, respectively.

A mixture was manufactured by mixing the negative electrode active material, carbon black as a conductive material, and polyacrylic acid (PAA) as a binder in a weight ratio of 80:10:10. Thereafter, 7.8 g of distilled water was added to 5 g of the mixture, which was then stirred to manufacture a negative electrode slurry. The negative electrode slurry was applied to a copper (Cu) metal thin film as a negative electrode current collector having a thickness of 20 µm, and dried. In this case, the temperature of the circulating air was 60°C. Then, the thin film was roll-pressed and dried at 130°C for 12 hours in a vacuum oven to prepare a negative electrode.

A lithium (Li) metal thin film obtained by cutting the manufactured negative electrode into a circular shape of 1.7671 cm² was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving LiPF₆ to a concentration of 1M was injected to manufacture a lithium coin half-cell.

The prepared batteries were charged and discharged to evaluate discharge capacity, initial efficiency, and capacity retention rate, which are shown in Table 2 below.

The charging and discharging were performed at 0.1 C for the first cycle and the second cycle, and the charging and discharging were performed at 0.5 C from the third cycle to the 49th cycle. At the 50th cycle, the charging and discharging were terminated in a charge state (with lithium contained in the negative electrode).
Charging conditions: CC (constant current)/CV (constant voltage) (5mV/0.005C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation. Initial efficiency (%) = (first time discharge capacity/first time charge capacity)×100

The capacity retention rate was derived by the following calculation. Capacity retention rate (%) = (49th time discharge capacity/first time discharge capacity)×100

**[Table 2]**

| | Discharge capacity (mAh/g) | Initial efficiency (%) | Capacity retention rate (%) |
|---|---|---|---|
| Example 1 | 1450 | 82.6 | 50 |
| Example 2 | 1440 | 82.5 | 48 |
| Example 3 | 1440 | 82.5 | 48 |
| Comparative Example 1 | 1400 | 82.1 | 45 |
| Comparative Example 2 | 1410 | 82.1 | 45 |
| Comparative Example 3 | 1400 | 82 | 43 |
| Comparative Example 4 | 1400 | 82.2 | 45 |

In Table 2, it could be confirmed that in Examples 1 to 3 using the negative electrode active material according to the present invention, N and H elements were included in the negative electrode active material, the total content of the N and H elements was 250 ppm or more and less than 3000 ppm based on 100 parts by weight of the negative electrode active material, the weight ratio of H element to N was less than 1, and the discharge capacity, initial efficiency, and capacity retention rate of the battery were improved. This appears to be because the swelling of the material was effectively controlled and the conductivity of the carbon layer was increased by the Mg-Si-O-N film appropriately formed on the surface of the silicon-based particles of the present invention. On the other hand, it could be confirmed that in Comparative Examples 1 to 4, the total content of N and H elements was less than 250 ppm or 3000 ppm or more, or the weight ratio of the H element to the N element in the active material was greater than 1, and in the negative electrode active materials of the Comparative Examples, the Mg-Si-O-N film was not formed well on the surface of the silicon-based particles or the hardness and elasticity of the formed Mg-Si-O-N film were low, making it difficult to control the swelling, thereby deteriorating the discharge capacity, initial efficiency, and life characteristics of the battery.

## Claims

1. A negative electrode active material comprising:
a silicon-based particle comprising SiOₓ (0<x<2) and a Mg compound; and
a carbon layer provided on at least a portion on the silicon-based particle,
wherein the negative electrode active material comprises N and H elements,
wherein a total content of the N and H elements is 250 ppm or more and less than 3000 ppm based on 100 parts by weight of the negative electrode active material, and
wherein a weight ratio of the H element to the N element is 1 or less.

2. The negative electrode active material of claim 1, wherein the N element is comprised in an amount of 125 ppm or more and less than 3000 ppm based on 100 parts by weight of the negative electrode active material.

3. The negative electrode active material of claim 1, wherein the H element is comprised in an amount of 1 ppm or more and less than 1500 ppm based on 100 parts by weight of the negative electrode active material.

4. The negative electrode active material of claim 1, wherein the weight ratio of the H element to the N element is 0.1 or greater and 1 or less.

5. The negative electrode active material of claim 1, wherein at least some of the N element is present with a Si-N bond.

6. The negative electrode active material of claim 1, wherein at least some of the N element is present in the carbon layer.

7. The negative electrode active material of claim 1, wherein the Mg compound comprises Mg silicate.

8. The negative electrode active material of claim 1, wherein Mg element is comprised in an amount of 0.1 part by weight or more and 40 parts by weight or less on the basis of a total of 100 parts by weight of the negative electrode active material.

9. The negative electrode active material of claim 1, wherein the carbon layer is comprised in an amount of 0.1 part by weight or more and 50 parts by weight or less on the basis of a total of 100 parts by weight of the negative electrode active material.

10. A method for manufacturing the negative electrode active material of any one of claims 1 to 9, the method comprising:
vaporizing Si powder, SiO₂ powder, and Mg, respectively, and mixing the same, and then cooling the mixed gas to form a silicon-based particle; and
mixing the silicon-based particle and a carbon-based material to provide a carbon layer on at least a portion of a surface of the silicon-based particle.

11. The method of claim 10, further comprising heattreating the silicon-based particle in a nitrogen atmosphere after forming the silicon-based particle.

12. The method of claim 10, wherein NH₃ gas is further included in addition to the carbon-based material in the mixing the silicon-based particles and a carbon-based material to provide a carbon layer on at least a portion of the surface of the silicon-based particle.

13. A negative electrode comprising the negative electrode active material of any one of claims 1 to 9.

14. A secondary battery comprising the negative electrode of claim 13.
